Europäisches Patentamt

European Patent Office

Office européen des brevets

(11) Veröffentlichungsnummer: **0 249 842**
**B1**

(12) **EUROPÄISCHE PATENTSCHRIFT**

(45) Veröffentlichungstag der Patentschrift: 06.02.91

(21) Anmeldenummer: 87108232.7

(22) Anmeldetag: 06.06.87

(51) Int. Cl.⁵: **B 29 C 67/22,** B 29 C 39/16,
B 29 C 33/10 // B29K105:04,
B29L9:00

(54) Verfahren und Doppeltransportband zum kontinuierlichen Herstellen von mit Deckschichten kaschierten Schaumstoffbahnen.

(30) Priorität: 18.06.86 DE 3620317

(43) Veröffentlichungstag der Anmeldung:
23.12.87 Patentblatt 87/52

(45) Bekanntmachung des Hinweises auf die
Patenterteilung:
06.02.91 Patentblatt 91/06

(84) Benannte Vertragsstaaten:
AT BE CH DE FR GB IT LI NL

(56) Entgegenhaltungen:
EP-A-0 019 998
DE-A-1 923 531
GB-A-1 201 063
US-A-3 860 371

(73) Patentinhaber: BAYER AG
D-5090 Leverkusen 1 Bayerwerk (DE)

(72) Erfinder: Hoffmann, Erwin, Dr.
Martin-Buber-Strasse 47
D-5090 Leverkusen 3 (DE)
Erfinder: Pfeil, Hans-Dieter
Moltkestrasse 23
D-5600 Wuppertal 1 (DE)
Erfinder: Dietrich, Werner, Dr Mobay
Corporation
Patent Department PU Division Mobay Road
Pittsburgh, PA. 15205 (US)
Erfinder: Bock, Rolf, DI.
Zedernweg 41
D-5090 Leverkusen 3 (DE)

**Beschreibung**

Die Erfindung betrifft ein Verfahren und ein Doppeltransportband zum kontinuierlichen Herstellen von mit Deckschichten kaschierten Schaumstoffbahnen, wobei eine obere Deckschicht und eine untere Deckschicht sowie eine Maschenwerkbahn in den Schäumraum eines Doppeltransportbandes eingeführt werden und auf der unteren Deckschicht vor dem Einlaufen in den Schämraum ein fließfähiges Reaktionsgemisch ausgebreitet wird, welches während des Aufschäumens beim Durchwandern des Schäumraumes die Maschenwerkbahn durchdringt und sich mit den Deckschichten verklebt.

Hierbei werden Polyurethanschaumstoffe, Polyisocyanuratschaumstoffe, Phenolharzschaumstoffe oder dergleichen erzeugt; je nachdem, welche Ausgangskomponenten für das fließfähige Reaktionsgemisch, aus dem sich der Schaumstoff bildet, eingesetzt werden. Es ist allgemein bekannt, Deckschichten rückseitig mit Faservliesen belegt oder zusammen mit Verstärkungsbahnen, wie Glasfasergewebe, in den Schäumraum einlaufen zu lassen. Damit soll die mechanische Festigkeit, insbesondere unmittelbar unterhalb der Deckschichten, erhöht werden, eine bessere Verbindung der Deckschichten mit dem Schaumstoffkern erzielt werden bzw. im Schaumstoff ein Profil abnehmender Dichte von den Deckschichten zur Mitte hin erzeugt werden. Letzteres gilt insbesondere bei der Verwendung von Faservliesen. Diese zusätzlichen Bahnen dienen also im wesentlichen der Verstärkung. Dementsprechend besitzen sie eine kleine Maschengröße bzw. ein hohes Quadratmetergewicht und bestehen aus hochwertigem Material, vorzugsweise aus Glasfasern. Unter dem Sammelbegriff "Maschenwerkbahnen" sind hier Bahnen aus Gewebe, Gestrick, Gitterwerk und im weitesten Sinne auch Faservliese zu verstehen.

Es hat sich gezeigt, daß bei den zu verarbeitenden Deckschichten, welche nur wenig oder gar nicht gasdurchlässig sind, sich unterhalb der oberen Deckschicht beim Ausschäumen mehr oder weniger große Gasblasen ansammeln. Diese zeichnen sich bei dünnen, folienartigen Deckschichten später auf deren Sichtfläche ab. Diese unregelmäßigen Wölbungen sind nicht nur ein Schönheitsfehler. Weil diese Stellen hohl sind, besteht gerade hier erhöhte Gefahr der Beschädigung der Deckschicht mit allen nachteiligen Folgen. Bei der Verwendung der bisher gebräuchlichen Maschenwerkbahnen, insbesondere Glasfasergewebe und Faservliese, hat sich gezeigt, daß auch hier die Entstehung von Gasblasen nicht zu vermeiden war. Je nach Beschaffenheit dieser Bahnen kam es vor, daß Stellen dieser Bahnen keinen Schaumstoff aufweisen, daß also die Gasblasen durch die Bahnen hindurchgingen; oder innerhalb einer Bahn war das Reaktionsgemisch offensichtlich durch Kapillarwirkung weitergekrochen und hat einen Schaumstoffilm gebildet, unter welchem Gasblasen vorhanden waren. Im letzeren Falle hat zwar der Schaumstoffilm samt Verstärkungsbahn die Deckschicht an dieser Stelle etwas stabilisiert; bei stoßartigen oder kräftigen Beanspruchungen an diesen Hohlstellen besteht aber auch hier die Gefahr von Schäden. Bei der obenbeschriebenen Verfahrensweise trat diese Blasenbildung nur unterhalb der oberen Deckschicht auf. Offensichtlich haben bei der Reaktion des chemischen Systems sich bildende Gase und beim Auftragen eingeschlossene Luftblasen genügend Zeit, innerhalb des aufschäumenden Reaktionsgemisches aufzusteigen und an die Oberfläche oder in deren Nähe zu gelangen, bevor dieses ausgehärtet ist.

Es besteht somit die Aufgabe, das eingangs beschrieben Verfahren bzw. das Transportband so zu verbessern, daß mit Deckschichten kaschierte Schaumstoffbahnen auch unterhalb der oberen Deckschicht blasenfrei sind.

Gelöst wird diese Aufgabe dadurch, daß eine Maschenwerkbahn verwendet wird, deren benachbarte Knotenpunkte einen Abstand von 3—15 mm untereinander aufweisen, während sowohl die maximale Höhe als auch die maximale Breite der Stege des Maschenwerkes zwischen 0,1—2,5 mm betragen, wobei diese Maschenwerkbahn im Abstand von 0—15 mm von der oberen Deckschicht einlaufen gelassen wird.

Vorzugsweise beträgt der Abstand der Knotenpunkte etwa 4—10 mm, Höhe und Breite bzw. Durchmesser der Stege 1,5—2 mm und der Abstand der Maschenwerkbahn etwa 4 bis 10 mm.

Es hat sich überraschenderweise gezeigt, daß durch Verwendung einer solchen Maschenwerkbahn gegenüber der vorgenannten Verstärkungsbahnen der angestrebte Zweck voll und ganz erfüllt wird. Es sei nochmals darauf hingewiesen, daß man unter dem Begriff "Maschenwerkbahn" Gewebe, Gestricke, Gitterwerk und im weitesten Sinne auch Faservliese versteht. Es müssen nur die angegebenen Parameter erfüllt sein. Da bei Faservliesen keine definierbaren Maschengrößen vorhanden sind, sollte die weitaus überwiegende Zahl der Öffnungen eines solchen Faservlieses in Anlehnung an die Abstände benachbarter Knotenpunkte eine Größe von 9—225 mm² aufweisen. Offensichtlich ist die Maschenweite von entscheidendem Einfluß. Ist sie zu klein, so tritt der gewünschte Effekt ebensowenig ein wie wenn die Maschenweite zu groß ist. Das gleiche gilt für die Querschnittsabmessungen der Stege des Maschenwerkes. Sie müssen offensichtlich eine gewisse Breite und Höhe bzw. Durchmesser besitzen, damit sichergestellt ist, daß selbst beim Anliegen dar Maschenwerkbahn an die Deckschicht die Gase in den einzelnen Maschen nicht abgekapselt werden, sondern entweichen können. Als Material für solche Maschenwerkbahnen eignen sich alle bisher für Verstärkungsbahnen benutzten Materialien, wie mineralische Fasern, insbesondere Glasfasern, Metallfasern oder Drähte, Kunststoffasern oder Drähte, Kohlefasern sowie natürliche Fasern, wie beispielsweise Sisal, Jute oder Hanf, sowie Papierfäden. Es versteht sich, daß eine Maschenwerkbahn auch verschiedene solcher Materialien enthalten kann. Insbesondere ist es auch möglich, über die Breite der Bahn verschieden große Maschen vorzusehen bzw. verschieden starke Stege (Fäden, Drähte) anzuordnen.

Vorzugsweise wird eine Maschenwerkbahn aus minderwertigem Material verwendet.

Gerade die Verwendung von Maschenwerkbahnen aus solchen preiswerten Materialien macht das neue Verfahren interessant. Für die Herstellung solcher Maschenwerkbahnen bieten sich insbesondere Abfallstoffe oder regenerierte Stoffe, insbesondere derartige Kunststoffe, an. Es versteht sich, daß auch hochwertige Materialien zum Einsatz kommen können, und zwar insbesondere dann, wenn diese Maschenwerkbahn zusätzlich der Verstärkung dienen soll.

Gemäß einer besondere Ausführungsform wird die Maschenwerkbahn getrennt von der Deckschicht einlaufen gelassen.

Diese Durchführungform ist die einfachste und läßt sich an bereits vorhandenen Doppeltransportbändern ohne weitere Einrichtungen durchführen, da in der Regel mindestens zwei Abrollstationen für die obere Deckschicht vorgesehen sind, um jeweils eine Reserverolle vorrätig zu haben, während von der anderen Rolle die Deckschicht abläuft. Man könnte also notfalls einen Rollenblock als Vorratsstation für die Maschenwerkbahn verwenden.

Alternativ ist es natürlich möglich, eine vorgefertigte Verbundbahn als Deckschicht und Maschenwerkbahn einlaufen zu lassen.

Diese mag im einfachsten Falle aus einer zusammen mit einer Maschenwerkbahn aufgewickelten Deckschicht bestehen, welche beim Einlaufen dementsprechend zusammen abrollen. Es kann sich aber auch um eine echte Verbundbahn handeln, indem die Maschenwerkbahn mit der Deckschicht beispielsweise in regelmäßigen Abständen über Klebestellen oder gegebenenfalls Schweißstellen verbunden ist. Wichtig erscheint dabei allerdings, daß die Stege des Maschenwerkes nur stellenweise oder teilweise an der Deckschicht anliegen dürfen, um eine Verteilung der Gase auch unterhalb der Deckschicht zu gewährleisten. Je nach Beschaffenheit und Verbindung zwischen Maschenwerkbahn und Deckschicht und insbesondere Stärke der Deckschicht können sich die Verbindungsstellen auf der Deckschicht außenseitig abzeichnen. Sofern die Verteilung der Verbindungsstellen regelmäßig ist, kann dies sogar einen dekorativen Effekt verursachen. Durch entsprechende Wahl der Lage der Verbindungsstellen ist dieser Effekt variierbar.

Gemäß einer weiteren besonderen Ausführungsform wird eine Maschenwerkbahn verwendet, welche mindestens teilweise Stege (Fäden, Drähte) aus dehnfähigem Material aufweist.

Eine solche vorzugsweise elastische Dehnfähigkeit hat den Effekt, daß die Maschenwerkbahn allein schon durch ihre Einlaufbewegung und auch durch die von den umlaufenden Transportbändern verursachten Erschütterungen eine Vibration erfährt, welche durch die Dehnfähigkeit verstärkt wird, wodurch die Zerstörung in der Bildung begriffener Gasblasen begünstigt wird.

Gemäß einer weiteren besonderen Ausführungsform wird die Maschenwerkbahn vor der Berührung mit dem aufschäumenden Reaktionsgemisch in Pulsation versetzt.

Auf diese Weise soll ebenfalls der oben beschriebene Effekt erzielt werden, nämlich daß durch minimale Relativbewegungen der Maschenbahn entstehende Gasblasen zerstört werden bzw. deren Bildung von vornherein vermieden wird.

Vorzugsweise wird auch mit Abstand von der unteren Deckschicht eine solche Maschenwerkbahn einlaufen gelassen.

Es hat sich nämlich gezeigt, daß auch bei der Verwertung von minderwertigem Material für die Maschenbahn diese in der fertigen Schaumstoffbahn unterhalb der Deckschicht eine derartige Stabilisierung bewirkt, daß man insbesondere bei rollbaren Deckschichten solche von niedrigerem Flächengewicht verwenden kann. Dieser Effekt ist zwar von der Verwendung von vorbekannten Verstärkungsbahnen her bekannt, war aber für die Verwendung der neuen Maschenwerkbahn nicht vorhersehbar. Diese Maßnahme ist insbesondere dann von Vorteil, wenn hochwertige Deckschichten, z.B. Aluminiumfolie, verwendet werden. Man kann dann deren Stärke beispielsweise bis an die Grenze der Zulässigkeit absenken. Bisher waren Folienstärken von ungefähr 50—80 μ gebräuchlich. Anstelle dessen lassen sich nunmehr Folien bis herab zur Hälfte der bisher gebräuchlichen Stärken einsetzen. Dies gilt natürlich genauso für die obere Deckschicht. Dadurch wird die Verteuerung der Herstellung durch die zusätzliche Maschenwerkbahn nicht nur ausgeglichen, sondern die Herstellung wird darüber hinaus sogar billiger.

Vorzugsweise wird am Beginn des Aufschäumprofils eine Überwälzung des Reaktionsgemisches aufrechterhalten.

Es hat sich nämlich gezeigt, daß gewisse chemische Systeme, insbesondere PIR-Systeme, aufgrund ihres Reaktionsverhaltens bereits wesentliche Teile ihrer Klebkraft verloren haben, bevor sie mit der oberen Deckschicht beim Aufschäumen in Berührung kommen. Bisher hat man solche Überwälzungen grundsätzlich zu vermeiden gesucht, weil sie zum einen die Gefahr beinhalten, daß Luft eingeschlagen wird, und zum anderen war man immer der Auffassung, daß über den Querschnitt gesehen, das Altersspektrum des Reaktionsgemisches möglichst eng sein soll. Hier wird also der entgegengesetzte Weg beschritten, indem man versucht, durch Überwälzungen das Altersspektrum des Gemisches zu vergrößern. Dadurch wird überraschenderweise die Klebewirkung wieder heraufgesetzt, und zum anderen scheinen bei der Überwälzung entstandene Lufteinschlüsse durch die Verwendung der neuartigen Maschenwerkbahnen wieder aufgelöst zu werden.

Wie schon beschrieben, bedarf es zur Durchführung des Verfahrens im einfachsten Falle keinerlei Änderung an den vorhandenen Doppeltransportbändern.

Möchte man die Maschenwerkbahn mit Abstand von der oberen Deckschicht bzw. dem oberen Transportband einführen, so geht man aus von einem oberen Transportband und einem unteren Transportband, welche einen Schäumraum begrenzen, wobei über dem unteren Transportband einlaufseitig eine Reaktionsgemischaufgabevorrichtung vorgesehen ist und Vorratsstationen für die Zuführung von Deckschichten und einer Maschenwerkbahn vorgesehen sind.

Das Neue ist dabei, daß am Eingang des Schäumraums unterhalb des oberen Transportbandes ein Distanzhalter angeordnet ist.

Dieser ist beispielsweise seitlich am Maschinengestell gelagert. Er besteht beispielsweise aus einer Schiene, über welche die obere Deckschicht herläuft und unter der die Maschenwerkbahn hergleitet. Es versteht sich, daß die Maschenwerkbahn entweder durch entsprechende Position des Rollenbockes oder durch eine Hilfsrolle so zugeführt werden müß, daß sie von unten gegen diese Schiene anliegt. Diese Schiene ist beispielsweise zum Einstellen eines anderen Abstandes gegen eine Schiene anderer Höhe austauschbar oder in einfachster Weise unter einem Winkel einstellbar, wodurch sich entsprechend dem Winkel die Höhe ändert. Dabei muß die Drehachse unmittelbar unterhalb des Untertrums des oberen Transportbandes angeordnet sein, damit die obere Deckschicht nicht eingeklemmt wird. Da die Schiene entsprechend dem gewünschten Abstand nur relativ geringe Stärke aufweisen darf, würde sie sich bei der üblichen Arbeitsbreite von 1 m bis 1,50 m an sich durchbiegen. Sie wird aber durch die Maschenwerkbahn abgestützt. Zusätzlich läßt sich die Schiene aber durch eine darunter angeordnete Walze größeren Durchmessers abstützen, wobei dann die Maschenwerkbahn zwischen Walze und Schiene hindurchgeführt würde.

Dazu ist allerdings Voraussetzung, daß die verbleibende Höhe des Schäumraumes die Anordnung einer solchen Abstützwalze erlaubt.

Der Abstand der Maschenwerkbahn beim Einlaufen in das aufschäumende Reaktionsgemisch läßt sich aber auch dadurch einstellen, daß der Distanzhalter in Arbeitsrichtung verschiebbar ist.

Schiebt man den Distanzhalter näher zum Aufschäumprofil, so vergrößert sich zwangsläufig der Einlaufwinkel, wodurch sich der Abstand der Deckschicht vergrößert. Geht man weiter davon weg, wird durch den flacheren Einlaufwinkel der Abstand geringer. Es versteht sich, daß die Maschenwerkbahn durch das aufschäumende und sich verfestigende Reaktionsgemisch etwas mit hochgedrückt wird, so daß der Einlaufpunkt in das Aufschäumprofil in der Regel etwas tiefer liegt als die spätere Position der Maschenwerkbahn unterhalb der Deckschicht im Fertigprodukt. Die Wahl des Einlaufabstandes hängt im wesentlichen von der Reaktionsgeschwindigkeit des chemischen Systems bzw. der Vorschubgeschwindikeit des Transportbandes ab.

Gemäß einer weiteren Ausführungsform ist dem Distanzhalter ein Pulsator zugeordnet.

Man kann zwar die Maschenwerkbahn auch durch andere Mittel in Position versetzen, die vorstehende Lösung bietet sich jedoch besonders an, weil hier die Pulsation möglichst nahe vor der Berührung mit dem aufsteigenden Aufschäumprofil stattfindet. Entsprechend der Anordnung der Unwucht läßt sich die Pulsationsrichtung wählen. Bevorzugt wird eine Pulsation in der Maschenwerkebene, weil diese dann einen sägeartigen Effekt auf das aufschäumende Reaktionsgemisch ausübt und dabei entstehende Blasen zerstört. Ein Zerschneiden des bereits verfestigten Schaumstoffes ist nicht zu befürchten, da die Bewegungen nur außerordentlich gering sind und die Pulsation durch den sich erhärtenden Schaumstoff sehr schnell gedämpft wird.

In der Zeichnung ist das neue Doppeltransportband in einem Ausführungsbeispiel rein schematisch dargestellt und nachstehend näher erläutert. Es zeigen:

Fig. 1 das Doppeltransportband in der Seitenansicht,

Fig. 2 das Doppeltransportband mit Blick auf den Schäumraum,

Fig. 3 die Draufsicht auf eine erste Ausführungsform der Maschenwerkbahn und

Fig. 4 die Draufsicht auf eine zweite Ausführungsform der Maschenwerkbahn.

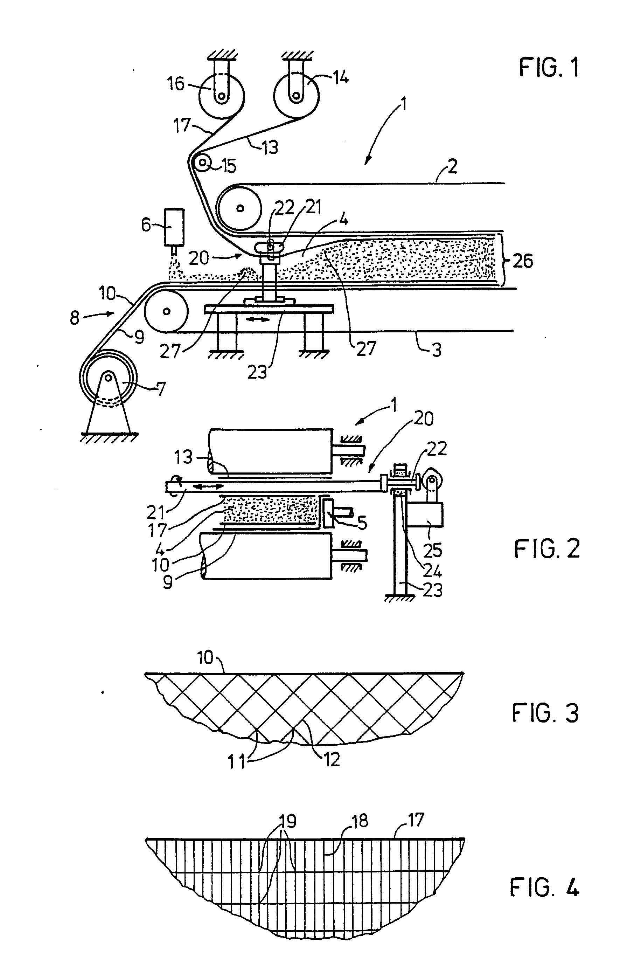

Das Doppeltransportband 1 weist ein oberes Transportband 2 und ein unteres Transportband 3 auf. Dazwischen ist ein Schäumraum 4 eingeschlossen. Er ist seitlich durch Führungsleisten 5 begrenzt. Über dem unteren Transportband 3 ist eingangsseitig eine Reaktionsgemischaufgabevorrichtung 6 angeordnet. Von einer als Rollenbock ausgebildeten Vorratsstatin 7 läuft auf dem unteren Transportband 3 eine Verbundbahn 8 aus einer aus Aluminiumfolie von 40 μ Stärke bestehende Deckschicht 9 und eine Maschenwerkbahn 10 ein. Diese Maschenwerkbahn 10 besteht aus einem Metallgewebe, dessen Knotenpunkte 11 (Fig. 3) einen Abstand von 10 mm voneinander aufweisen und dessen Stege 12 (Drähte) einen Durchmesser von 0,5 mm besitzen. Unter das obere Transportband 2 läuft als Deckschicht 13 ebenfalls eine Aluminiumfolie der oben beschriebenen Art ein. Sie wird von einer als Rollenlagerrung gestalteten Vorratsstation 14 abgezogen und dabei über eine Umlenkrolle 15 geführt. Über die gleiche Umlenkrolle 15 wird von einer ebenfalls als Rollenlagerung ausgebildeten Vorratsstation 16 eine Maschenwerkbahn 17 (Fig. 4) eingeführt. Sie besteht aus Kunststoffgitterwerk, welches aus Abfallpolyethylen hergestellt wurde. Die Stege 18 (Drähte) dieses Gitterwerkes besitzen rechteckigen Querschnitt und eine Höhe von 1,0 mm, während ihre Breite lediglich 0,5 mm beträgt. An den Knotenpunkten 19 sind die sich kreuzenden Stege 18 miteinander verschweißt. Der Abstand der Knotenpunkte 19 voneinander beträgt in Achsrichtung der Maschenwerkbahn 17 3 mm und quer dazu 10 mm. Die obere Deckschicht 13 ist zwischen dem oberen Transportband 2 und einem darauf angeordneten Distanzhalter 20 geführt. Dieser Distanzhalter 20 besteht aus einer Schiene 21, welche mittels Achszapfen 22 verdrehbar am Maschinengestell 23 gelagert ist. Die Maschenwerkbahn 17 ist unter der Schiene 21 her an dieser anliegend geführt (der besseren Deutlichkeit wegen jedoch mit Abstand dargestellt). Durch Verdrehen der Schiene 21 läßt sich der Abstand der Maschenwerkbahn 17 von der oberen Deckschicht 13 beim Eintauchen in das ansteigende Schäumprofil 24 verändern. Einer der Achszapfen 22 ist mit einem am Maschinengestell 23 gelagerten Pulsator 25 gekoppelt, welcher mit einer Frequenz von 30 Hz die Schiene 21 quer zur Arbeitsrichtung in Führung versetzt. Das Doppeltransportband 1 arbeitet mit einer Vorschubgeschwindigkeit von 6 m/min. Die Dicke der gefertigten kaschierten Schaumstoffbahn 26 beträgt 40 mm. Am Beginn des Schäumprofils 26 bildet das Reaktionsgemisch eine wulstartige Überwälzung 27, wodurch sich älteres mit jüngerem Reaktionsgemisch vermengt.

## Patentansprüche

1. Verfahren zum kontinuierlichen Herstellen von mit Deckschichten (9, 13) kaschierten Schaumstoffbahnen (26), wobei eine obere Deckschicht (13) und eine untere Deckschicht (9) sowie eine Maschenwerkbahn (17) in den Schäumraum (4) eines Doppeltransportbandes (1) eingeführt werden und auf der unteren Deckschicht (9) vor dem Einlaufen in den Schäumraum (4) ein fließfähiges Reaktionsgemisch ausgebreitet wird, welches während des Aufschäumens beim Durchwandern des Schäumraumes (4) die Maschenwerkbahn (17) durchdringt und sich mit den Deckschichten (9, 13) verklebt, dadurch gekennzeichnet, daß eine Maschenwerkbahn (17) verwendet wird, deren benachbarte Knotenpunkte (19) einen Abstand von 3 bis 15 mm voneinander aufweisen, während sowohl die maximale Höhe als auch die maximale Breite der Stege (18) des Maschenwerkes zwischen 0,1 bis 2,5 mm betragen, wobei diese Maschenwerkbahn (17) im Abstand von 0 bis 15 mm von der oberen Deckschicht (13) einlaufen gelassen wird.

2. Verfahren nach Anspruch 1, gekennzeichnet durch die Verwendung einer Maschenwerkbahn (17) aus minderwertigem Material.

3. Verfahren nach Anspruch 1 oder 2, dadurch gekennzeichnet, daß die Maschenwerkbahn (17) getrennt von der Deckschicht (13) einlaufen gelassen wird.

4. Verfahren nach einem der Ansprüche 1 bis 3, dadurch gekennzeichnet, daß eine vorgefertigte Verbundbahn (8) aus Deckschicht (9) und Maschenwerkbahn (10) einlaufen gelassen wird.

5. Verfahren nach einem der Ansprüche 1 bis 4, dadurch gekennzeichnet, daß eine Maschenwerkbahn (17) verwendet wird, welche mindestens teilweise Stege (18) (Fäden, Drähte) aus dehnfähigem Material aufweist.

6. Verfahren nach einem der Ansprüche 1 bis 5, dadurch gekennzeichnet, daß die Maschenwerkbahn (17) vor der Berührung mit dem aufschäumenden Reaktionsgemisch in Pulsation versetzt wird.

7. Verfahren nach einem der Ansprüche 1 bis 6, dadurch gekennzeichnet, daß auch im Abstand von 0 bis 15 mm von der unteren Deckschicht (9) eine solche Maschenwerkbahn (10) einlaufen gelassen wird.

8. Verfahren nach einem der Ansprüche 1 bis 7, dadurch gekennzeichnet, daß am Beginn des Aufschäumprofils (24) eine Überwälzung (27) des Reaktionsgemisches aufrechterhalten wird.

9. Doppeltransportband (1) zur Durchführung des Verfahrens, bestehend aus einem oberen Transportband (2) und einem unteren Transportband (3), welche einen Schäumraum (4) begrenzen, wobei über dem unteren Transportband (3) einlaufseitig eine Reaktionsgemischaufgabevorrichtung (6) vorgesehen ist, und Vorratsstationen (7, 14, 16) für die Zuführung von Deckschichten (9, 13) und einer Maschenwerkbahn (17) vorgesehen sind, dadurch gekennzeichnet, daß am Eingang des Schäumraumes (4) unterhalb des oberen Transportbandes (2) ein Distanzhalter (20) angeordnet ist.

10. Doppeltransportband nach Anspruch 9, dadurch gekennzeichnet, daß der Distanzhalter (20) in Arbeitsrichtung verschiebbar ist.

11. Doppeltransportband nach Anspruch 9 oder 10, dadurch gekennzeichnet, daß der Distanzhalter (20) höheneinstellbar ist.

12. Doppeltransportband nach einem der Ansprüche 9 bis 11, dadurch gekennzeichnet, daß dem Distanzhalter (20) ein Pulsator (25) zugeordnet ist.

## Revendications

1. Procédé de fabrication continu de bandes de mousse (26) revêtues de couches de revêtement (9, 13), dans lequel on introduit une couches de revêtement supérieure (13) et une couche de revêtement inférieure (9) ainsi qu'une bande de matériau réticulaire (17) dans la chambre de moussage (4) d'une bande transporteuse double (1) et on répand sur la couche de revêtement inférieure (9), avant son entrée dans la chambre de moussage (4), un mélange réactionnel fluide qui, au cours du moussage, en parcourant la chambre de moussage (4), traverse la bande de matériau réticulaire (17) et se colle aux couches de revêtement (9, 13), caractérisé en ce qu'on utilise une bande de matériau réticulaire (17) dont les points de jonction adjacents (19) présentent un écartement mutuel de 3 à 15 mm, la hauteur maximale et la largeur maximale des parties pleines (18) du matériau réticulaire étant comprises entre 0,1 et 2,5 mm, cette bande de matériau réticulaire (17) étant introduite à un écartement de 0 à 15 mm de la couche de revêtement supérieure (13).

2. Procédé selon la revendication 1, caractérisé par l'utilisation d'une bande de matériau réticulaire (17) faite d'une matière peu coûteuse.

3. Procédé selon la revendication 1 ou 2, caractérisé en ce qu'on introduit la bande de matériau rétuculaire (17) séparément de la couche de revêtement (13).

4. Procédé selon une des revendications 1 à 3, caractérisé en ce qu'on introduit une bande composite préfabriquée, formée d'une couche de revêtement (9) et d'une bande de matériau réticulaire (10).

5. Procédé selon une des revendications 1 à 4, caractérisé en ce qu'on utilise une bande de matériau réticulaire (17) qui présente au moins en partie des parties pleines (18) (fils souples ou rigides) faits d'une matière extensible.

6. Procédé selon une des revendications 1 à 5, caractérisé en ce que la bande de matériau réticulaire (17) est mise en pulsation avant d'entrer en contact avec le mélange réactionnel en cours de moussage.

7. Procédé selon une des revendications 1 à 6, caractérisé en ce qu'on fait aussi entrer une bande de matériau réticulaire (10) à une distance de 0 à 15 mm de la couche de revêtement intérieure (9).

8. Procédé selon une des revendications 1 à 7, caractérisé en ce qu'au début du profil de moussage (24), on entretient un rouleau (27) du mélange réactionnel.

9. Bande transporteuse double (1) pour la mise en oeuvre du procédé, composée d'une bande transporteuse supérieure (2) et d'une bande transporteuse inférieure (3), qui délimitent une chambre de moussage (4), dans laquelle il est prévu au-dessous de la bande transporteuse inférieure (3), sur le côté d'entrée, un dispositif de chargement de mélange réactionnel (6), et dans laquelle il est prévu des postes d'alimentation (7, 14, 16) pour l'amenée des couches de revêtement (9, 13) et d'une bande de matériau réticulaire (17), caractérisée en ce qu'un écarteur (20) est disposé à l'entrée de la chambre de moussage (4), au-dessous de la bande transporteuse supérieure (2).

10. Bande transporteuse double selon la revendication 9, caractérisée en ce que l'écarteur (20) est mobile en translation dans la direction du travail.

11. Bande transporteuse selon la revendication 9 ou 10, caractérisée en ce que l'écarteur (20) est réglable en hauteur.

12. Bande transporteuse selon une des revendications 9 à 11, caractérisée en ce qu'un pulsateur (25) est associé à l'écarteur (20).

**Claims**

1. Process for the continuous production of foamed plastic sheetings (26) laminated with overlays (9, 13), in which an upper overlay (13) and a lower overlay (9) as well as a meshwork web (17) are introduced into the foam space (4) of a double conveyor belt (1) and there is spread out on the lower overlay (9) before running into the foam space (4) a free-flowing reaction mixture which during the foaming on travelling through the foam space (4) penetrates the meshwork web (17) and adheres to the overlays (9, 13), characterized in that a meshwork web (17) is used whose adjacent intersections (19) have a distance from each other of 3 to 15 mm, while both the maximum height and the maximum width of the crosspieces (18) of the meshwork are between 0.1 and 2.5 mm, this meshwork (17) being caused to run in at a distance of 0 to 15 mm from the upper overlay (13).

2. Process according to claim 1, characterized by the use of a meshwork web (17) of low-grade material.

3. Process according to claim 1 or 2, characterized in that the meshwork web (17) is caused to run in separately from the overlay (13).

4. Process according to one of claims 1 to 3, characterized in that a prefabricated composite web (8) of overlay (9) and meshwork web (10) is caused to run in.

5. Process according to one of claims 1 to 4, characterized in that a meshwork web (17) is used which at least partially has crosspieces (18) (threads, wires) of extensible material.

6. Process according to one of claims 1 to 5, characterized in that the meshwork web (17) before contact with the foaming reaction mixture is set into pulsation.

7. Process according to one of claims 1 to 6, characterized in that such a meshwork web (10) is also caused to run in at a distance of 0 to 15 mm from the lower overlay (9).

8. Process according to one of claims 1 to 7, characterized in that at the start of the foaming profile (24) an overrolling (27) of the reaction mixture is maintained.

9. Double conveyor belt (1) for the execution of the process, consisting of an upper conveyor belt (2) and a lower conveyor belt (3) which border a foam space (4), in which above the lower conveyor belt (3) on the entry side a reaction mixture distributing device (6) is provided, and supply stations (7, 14, 16) for the feeding of overlays (9, 13) and a meshwork web (17), characterized in that a spacing means (20) is arranged at the entrance to the foam space (4) below the upper conveyor belt (2).

10. Double conveyor belt according to claim 9, characterized in that the spacing means (20) is movable in the operating direction.

11. Double conveyor belt according to claim 9 or 10, characterized in that the spacing means (20) is adjustable in height.

12. Double conveyor belt according to one of claims 9 to 11, characterized in that a pulsator (25) is coordinated with the spacing means (20).

FIG. 1

FIG. 2

FIG. 3

FIG. 4